# EUROPÄISCHE PATENTANMELDUNG

(11) **EP 3 756 733 A1**
(43) Veröffentlichungstag der Anmeldung: **30.12.2020**
(21) Anmeldenummer: 19183172.6
(22) Anmeldetag: 28.06.2019
(51) Int. Cl.: A62C 35/68, F16L 41/12, A62C 37/14, A62C 3/00

(54) **FEUERLÖSCHANLAGE UND SPRINKLER FÜR EINE FEUERLÖSCHANLAGE**

(71) Anmelder: Calanbau Brandschutzanlagen GmbH, 22113 Hamburg (DE)
(72) Erfinder: Falk, Stefan, 23564 Lübeck (DE); Messner, Bernd, 61137 Schöneck-Büdesheim (DE); Fengler, Dirk, 22885 Barsbüttel (DE); Thoma, Markus, 4125 Riehen (CH)
(74) Vertreter: Glawe, Delfs, Moll

(57) **Zusammenfassung**

Feuerlöschanlage mit einem Rohr (19) zum Zuführen eines Löschmittels und mit einem an das Rohr (19) angeschlossenen Sprinkler (20). Der Sprinkler (20) hat einen an eine Umfangsfläche (30) des Rohrs (19) angepassten Anschlussflansch (28). Der Anschlussflansch (28) ist gegen die Umfangsfläche (30) des Rohrs (19) gespannt. Die Erfindung betrifft auch einen Sprinkler (20) für eine Feuerlöschanlage.

## Beschreibung

Die Erfindung betrifft eine Feuerlöschanlage mit einem Rohr zum Zuführen eines Löschmittels und mit einem an das Rohr angeschlossenen Sprinkler. Die Erfindung betrifft außerdem einen Sprinkler für eine solche Feuerlöschanlage.

Feuerlöschanlagen umfassen ein Rohrsystem, das im Bereitschaftszustand der Feuerlöschanlage mit einem unter Druck stehenden Löschmittel gefüllt ist. Bei Ausbruch eines Brandes löst der Sprinkler aus und öffnet eine Auslassöffnung, durch die das Löschmittel austreten und gegen den Brand wirken kann.

Bei bekannten Feuerlöschanlagen ist das Rohr mit einem Rohrstutzen versehen, der von dem Rohr abzweigt und an den der Sprinkler angeschlossen ist. Die Verbindung zwischen dem Sprinkler und dem Rohrstutzen ist üblicherweise so gestaltet, dass der Sprinkler und der Rohrstutzen in Längsrichtung überlappen. Der Überlappungsbereich wird genutzt, um eine mechanisch feste und gegenüber dem Löschmittel dichte Verbindung zwischen dem Sprinkler und dem Rohrstutzen herzustellen. Beispielsweise kann eine Gewindeverbindung zwischen dem Sprinkler und dem Rohrstutzen vorgesehen sein, wobei die Zwischenräume zwischen den Gewindegängen mit einem Dichtmittel abgedichtet sind.

Durch den Rohrstutzen und den Überlappungsbereich ergibt sich ein Mindestabstand zwischen dem Rohr und dem distalen Ende des Sprinklers, um den der Sprinkler gegenüber dem Rohr vorspringt. Mit einem weit gegenüber dem Rohr vorspringenden Sprinkler ist allgemein ein höheres Risiko einer Beschädigung verbunden.

Ist beispielsweise das Rohr der Feuerlöschanlage zwischen zwei Regalböden eines Regallagers angeordnet, so wird durch den Sprinkler die nutzbare Höhe des Regalfachs vermindert. Wird dies von einem Staplerfahrer nicht beachtet und stößt der Staplerfahrer mit seiner Ladung an dem Sprinkler an, so kann der Sprinkler beschädigt werden und sich öffnen. Ein beschädigter oder abgerissener Sprinkler löst einen Feueralarm aus und verursacht einen schweren Wasserschaden.

Der Erfindung liegt die Aufgabe zugrunde, eine Feuerlöschanlage und einen Sprinkler vorzustellen, mit denen das Risiko einer versehentlichen Beschädigung vermindert wird. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei der erfindungsgemäßen Feuerlöschanlage hat der Sprinkler einen an eine Umfangsfläche des Rohrs angepassten Anschlussflansch. Der Anschlussflansch ist gegen die Umfangsfläche des Rohrs gespannt.

Die Erfindung basiert auf dem Gedanken, dass die Gefahr einer Beschädigung der Feuerlöschanlage sich reduzieren lässt, wenn der Sprinkler weniger weit gegenüber dem Rohr vorspringt, der Abstand zwischen dem Außenumfang des Rohrs und dem distalen Ende des Sprinklers also vermindert wird. Es wird dann weniger wahrscheinlich, dass der Sprinkler durch Anstoßen mechanisch beschädigt wird.

Mit der Erfindung wird vorgeschlagen, die Feuerlöschanlage kompakter zu gestalten, indem der Sprinkler einen Anschlussflansch aufweist, der direkt auf der äußeren Oberfläche des Rohrs aufliegt. Auf den bei klassischen Sprinklern erforderlichen Überlappungsbereich in Längsrichtung des Sprinklers kann verzichtet werden, so dass der Sprinkler weniger weit gegenüber dem Rohr vorspringt.

Der Sprinkler kann eine Auslassöffnung aufweisen, die im Bereitschaftszustand der Feuerlöschanlage geschlossen ist und die im Einsatzzustand der Feuerlöschanlage geöffnet ist. Im Einsatzzustand der Feuerlöschanlage tritt das Löschmittel durch den Sprinkler aus dem Rohr aus.

Die Auslassöffnung des Sprinklers kann im Bereitschaftszustand mit einem Stopfen verschlossen sein, der beim Auslösen des Sprinklers entfernt wird. Der Sprinkler kann ein Auslöseelement umfassen, das im Bereitschaftszustand der Feuerlöschanlage den Stopfen im geschlossenen Zustand hält. Beim Auslösen des Sprinklers kann das Auslöseelement den Stopfen freigeben, so dass der Stopfen durch den Druck des Löschmittels aus der Auslassöffnung herausgedrückt wird.

Das Auslöseelement kann dazu ausgelegt sein, auf Wärmeeinwirkung zu reagieren. Beispielsweise kann das Auslöseelement als Schmelzlot gestaltet sein, das bei Umgebungstemperatur fest ist und unter Wärmeeinwirkung schmilzt. Möglich ist auch ein Auslöseelement in Form eines Glasfasses, das bei Wärmeeinwirkung zerspringt. Das Glasfass kann sich im Bereitschaftszustand der Feuerlöschanlage zwischen dem Stopfen und einem Sprühteller des Sprinklers abstützen.

Der Sprühteller kann das distale Ende des Sprinklers bilden, so dass der Sprinkler keine weiteren Komponenten umfasst, die einen größeren Abstand zu dem Rohr haben als der Sprühteller. Der Sprühteller kann dazu ausgelegt sein, den aus der Auslassöffnung des Sprinklers austretenden Löschmittelstrahl zur Seite umzulenken. Vorzugsweise wird das Löschmittel im Wesentlichen gleichmäßig über alle seitlichen Richtungen verteilt. Der Sprinkler kann ein Basisstück umfassen, in dem die Auslassöffnung angeordnet ist. Von dem Basistück kann sich ein Halteelement, beispielsweise in Form eines Bügels zu dem Sprühteller erstrecken. Das Basisstück kann mit einer Bohrung versehen sein, deren eines Ende die Auslassöffnung des Sprinklers bildet und deren anderes Ende auf der Umfangsfläche des Rohrs aufliegt. Der Abstand zwischen der Umfangsfläche des Rohrs und der Auslassöffnung des Sprinklers ist vorzugsweise kleiner als 10 mm, weiter vorzugsweise kleiner als 5 mm, weiter vorzugsweise kleiner als 3 mm.

In der Rohrwand kann eine Öffnung ausgebildet sein, die mit der Bohrung in dem Basisstück korrespondiert, so dass das Löschmittel aus dem Innenraum des Rohrs durch die Öffnung in der Rohrwand und die Bohrung in dem Basisstück aus dem Sprinkler austreten kann. In einer Ausführungsform stimmt der Durchmesser der Öffnung in der Rohrwand mit dem Durchmesser der Bohrung überein. Der Durchmesser der Öffnung in der Rohrwand kann beispielsweise zwischen 20 mm und 40 mm liegen.

Der Anschlussflansch des Sprinklers kann eine Kontur aufspannen, die einem Umfangsabschnitt eines Zylinders entspricht. Der Durchmesser des Zylinders kann dem Außendurchmesser des Rohrs entsprechen, so dass der Anschlussflansch mit einer Auflagefläche flächig auf der Außenfläche des Rohrs aufliegt. Die Längsrichtung des Sprinklers kann rechtwinklig zu der Achse des Zylinders ausgerichtet sein. Zwischen dem Anschlussflansch und der Außenwand des Rohrs kann ein Dichtelement angeordnet sein. Das Dichtelement kann die Form eines Dichtrings haben, der sich um die Öffnung in der Rohrwand herum erstreckt.

Der Abstand zwischen dem distalen Ende des Sprinklers und der Umfangsfläche des Rohrs kann bei der erfindungsgemäßen Feuerlöschanlage beispielsweise zwischen 5 mm und 50 mm, vorzugsweise zwischen 10 mm und 40 mm liegen. Der Sprinkler liegt mit einem eine Einlassöffnung des Sprinklers bildenden Bereich einer Auflagefläche auf der Umfangsfläche des Rohrs auf. Der Abstand zwischen diesem Bereich der Auflagefläche und dem distalen Ende des Sprinklers ist folglich entsprechend. Das Rohr kann einen Außendurchmesser haben, der zwischen 40 mm und 80 mm liegt.

Die Richtung der Spannkraft zwischen dem Sprinkler und dem Rohr kann parallel zu der Längsrichtung des Sprinklers und/oder rechtwinklig zu der Achse des Rohrs wirken.

Es kann eine Montageschelle vorgesehen sein, um den Anschlussflansch gegen die Umfangsfläche des Rohrs zu spannen. Die Montageschelle kann auf der gegenüberliegenden Seite des Rohrs angeordnet sein, so dass das Rohr zwischen der Montageschelle und dem Sprinkler eingeschlossen ist.

Der Sprinkler kann mit einem Spannelement gegen die Montageschelle gespannt werden, so dass der Anschlussflansch des Sprinklers gegen die Umfangsfläche des Rohrs gedrückt wird. Der Auflagedruck zwischen dem Sprinkler und dem Rohr kann so bemessen sein, dass einerseits eine dichte Verbindung zwischen dem Sprinkler und dem Rohr gebildet wird und andererseits das Rohr nicht verformt wird.

Zwischen dem Sprinkler und der Montageschelle können sich zwei Spannelemente erstrecken, die insbesondere symmetrisch zu der Längsachse des Sprinklers angeordnet sein können. Die Längsachse des Sprinklers kann so ausgerichtet sein, dass sie die Achse des Rohrs schneidet. Die Spannelemente können in Richtung des Sprinklers zusammenlaufen, so dass die Anlenkpunkte der Spannelemente an der Montageschelle einen größeren Abstand zueinander haben als die Anlenkpunkte der Spannelemente am Sprinkler.

Die Spannelemente können ein Gewinde umfassen, über die die Spannelemente gespannt werden. Durch das Spannen kann sich der Winkel verändern, den die Spannelemente mit der Längsrichtung des Sprinklers einschließen. Um das Auftreten von unerwünschten Spannungen zu vermeiden, kann ein Ende des Spannelements schwenkbar gelagert sein, wobei die Schwenklagerung insbesondere so gestaltet sein kann, dass eine Schwenkbewegung um eine zu der Achse des Rohrs parallele Achse möglich ist.

Das Spannelement kann als Bolzen gestaltet sein, der durch eine Bohrung in der Montageschelle hindurch geführt ist. Der durch die Bohrung hindurchgeführte Abschnitt des Bolzens kann mit einem Außengewinde versehen sein. Eine Mutter mit einem dazu passenden Innengewinde kann genutzt werden, um die Montageschelle in Längsrichtung des Bolzens zu spannen.

Das andere Ende des Bolzens kann schwenkbar an dem Sprinkler gelagert sein. Die Schwenkachse kann durch ein Kopfteil des Bolzens gebildet werden, der sich rechtwinklig zu der Längsrichtung des Bolzens und/oder parallel zu der Achse des Rohrs erstrecken kann. Das Kopfstück des Bolzens kann in einer gabelförmigen Aufnahme des Sprinklers gehalten sein.

Die Erfindung betrifft auch ein Lagerregal mit einer solchen Feuerlöschanlage. Das Rohr der Feuerlöschanlage ist oberhalb einer Lagerplattform des Lagerregals angeordnet und umfasst einen Sprinkler. Das zu der Lagerplattform gehörige Lagerfach ist in der Höhe durch eine obere Abschlusskante begrenzt. Das distale Ende des Sprinklers ist zwischen 2 mm und 30 mm, vorzugsweise zwischen 5 mm und 20 mm unterhalb der Abschlusskante des Lagerfachs angeordnet.

Der Sprinkler kann sich von dem distalen Ende bis zu einem oberhalb des Sprinklers angeordneten Rohr erstrecken. Die Längsrichtung des Sprinklers kann vertikal ausgerichtet sein. Die Erfindung betrifft außerdem einen Sprinkler für eine solche Feuerlöschanlage. Der Sprinkler umfasst eine Einlassöffnung, die dazu bestimmt ist, an ein Rohr der Feuerlöschanlage angeschlossen zu werden, sowie eine Auslassöffnung, die in einem Bereitschaftszustand des Sprinklers mit einem Verschlusselement verschlossen ist. Der Sprinkler umfasst einen Anschlussflansch, der eine Auflagefläche in Form eines Umfangsabschnitts eines Zylinders bildet. Die Einlassöffnung bildet eine Ausnehmung in der Auflagefläche des Anschlussflanschs.

Der Sprinkler kann mit weiteren Merkmalen fortgebildet werden, die im Zusammenhang der erfindungsgemäßen Feuerlöschanlage beschrieben sind. Die Feuerlöschanlage kann mit weiteren Merkmalen fortgebildet werden, die im Zusammenhang des erfindungsgemäßen Sprinklers beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein erfindungsgemäßes Lagerregal;
- Fig. 2:: eine schematische Darstellung einer erfindungsgemäßen Feuerlöschanlage;
- Fig. 3:: einen erfindungsgemäßen Sprinkler;
- Fig. 4:: eine Schnittanschicht des Sprinklers aus Fig. 3 in vergrößerter Darstellung.

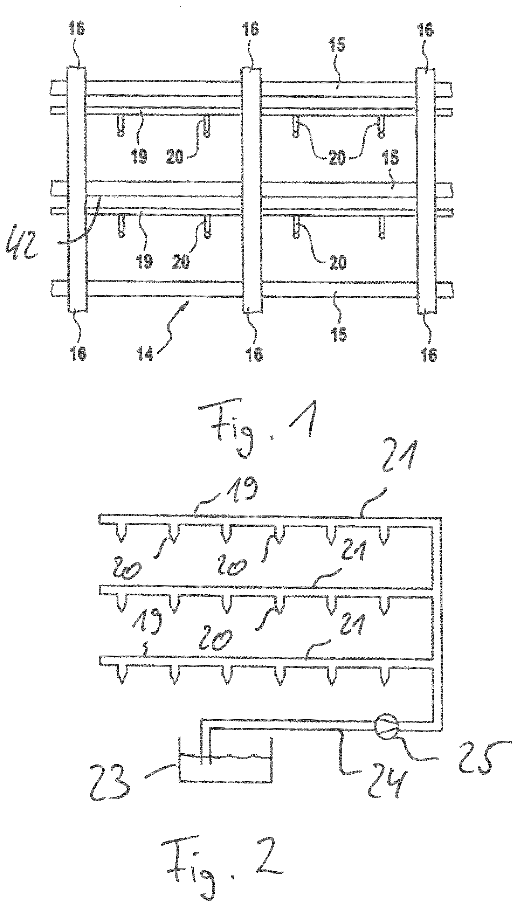

Bei einem in Fig. 1 gezeigten Hochregal 14 ist eine Mehrzahl von Regalplattformen 15 übereinander angeordnet. Die Regalplattformen 15 bilden waagerecht angeordnete Flächen, auf denen Gegenstände gelagert werden können. Das Hochregal 14 umfasst eine Mehrzahl von senkrecht angeordneten Regalständern 16, die so angeordnet sind, dass sie die Regalplattformen 15 zwischen sich einschließen. Die Regalplattformen 15 sind mit den Regalständern 16 verbunden, so dass die Lasten von den Regalplattformen 15 über die Regalständer 16 in den Boden eingeleitet werden.

Fig. 1 zeigt die Ansicht auf die Rückseite des Hochregals 14. Von der Rückseite erfolgt kein Zugang zu den Gegenständen auf den Regalplattformen 15, die Rückseite des Hochregals 14 kann also beispielsweise an einer Wand stehen. Das Beladen und Entladen des Hochregals 14 erfolgt von der gegenüberliegenden Vorderseite des Hochregals 14. Dort ist genügend Platz, so dass beispielsweise mit einem Gabelstapler an das Hochregal 14 herangefahren werden kann.

An den Regalständern 16 aufgehängt ist ein Rohr 19 einer nur ausschnittsweise dargestellten Feuerlöschanlage. Das Rohr 19 umfasst eine Mehrzahl von nach unten weisenden Sprinklern 20.

Gemäß Fig. 2 umfasst die Feuerlöschanlage eine Mehrzahl von Strängen 21, die sich parallel zueinander erstrecken und über das Hochregal 14 verteilt sind. Von einem Löschmittelvorrat 23 erstreckt sich eine gemeinsame Versorgungsleitung 24 zu den drei Strängen 21. Eine in der Versorgungsleitung 24 angeordnete Pumpe 25 ist dazu ausgelegt, Löschmittel aus dem Löschmittelvorrat 23 anzusaugen und zu den Sprinklern 20 zu fördern. Das Löschmittel kann beispielsweise Wasser sein.

Im Bereitschaftszustand der Feuerlöschanlage sind alle Sprinkler 20 geschlossen. Die Rohre 19 und die Versorgungsleitung 24 sind mit Löschmittel gefüllt. Das Löschmittel steht unter einem Druck von beispielsweise 10 bar. Bricht in einem der Regale 14 ein Feuer aus, so lösen ein oder mehrere der Sprinkler 20 durch die Wärmeeinwirkung aus, so dass Löschmittel austreten und gegen den Brand wirken kann.

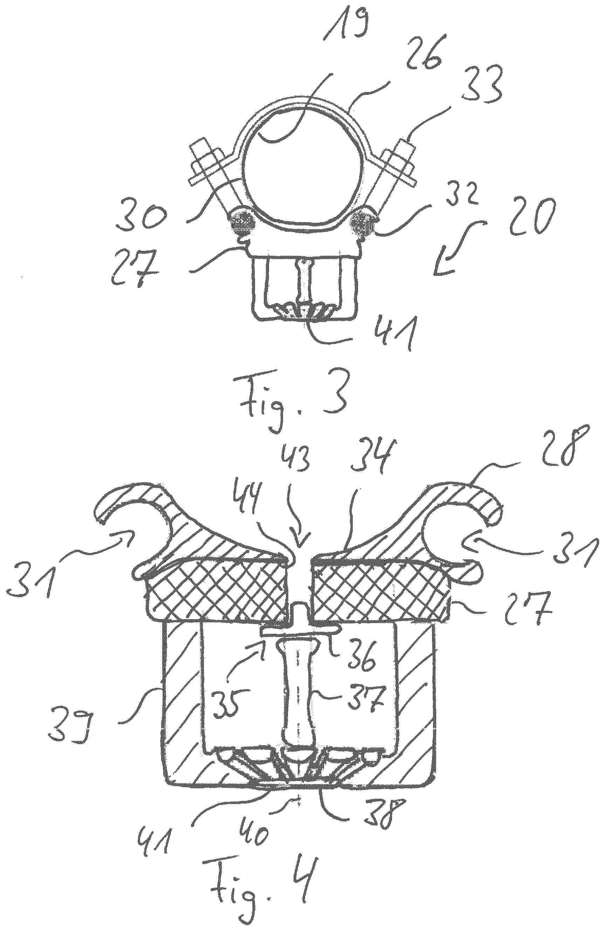

Die Sprinkler 20 sind gemäß Fig. 3 durch eine Montageschelle 26 mit dem Rohr 19 der Feuerlöschanlage verbunden. Ein Basisstück 27 des Sprinklers 20 liegt über einen Anschlussflansch 28 auf der Umfangsfläche 30 des Rohrs 19 auf. Der Anschlussflansch 28 umfasst zwei Aufnahmen 31 in die der Kopf 32 eines Spannbolzens 33 eingesetzt werden kann. Der Kopf 32 des Spannbolzens 33 ist in der Aufnahme um eine zu dem Rohr 19 parallele Achse schwenkbar.

Das gegenüberliegende Ende des Spannbolzens 33 ist durch eine Bohrung in der Montageschelle 26 hindurchgeführt. Mit jeweils einer Mutter werden die Spannbolzen 33 gespannt, so dass sie eine Zugkraft zwischen der Montageschelle 26 und dem Sprinkler 20 ausüben.

Der Anschlussflansch 28 bildet eine Oberfläche in Form eines Umfangsabschnitts eines Zylinders. Dieser Teil des Anschlussflanschs 28 bildet eine Auflagefläche 34, die zu der Umfangsfläche 30 des Rohrs 19 passt. Zwischen der Auflagefläche 34 des Sprinklers 20 und der Umfangsfläche 30 des Rohrs 19 ist ein Dichtelement angeordnet mit dem ein Austritt des Löschmittels an dieser Schnittstelle verhindert wird.

Das Basisstück 27 des Sprinklers ist mit einer Bohrung 43 versehen, die sich in Längsrichtung 40 des Sprinklers 20 von der Auflagefläche 34 bis zu einer Auslassöffnung 35 erstreckt. In der Auslassöffnung 35 ist ein Verschlussstopfen 36 angeordnet, der die Auslassöffnung 35 im Ruhezustand der Feuerlöschanlage dicht verschließt. Der Verschlussstopfen 36 wird in Position gehalten durch ein Glasfass 37, dessen anderes Ende sich an einem Sprühteller 38 abstützt. Der Sprühteller 38 ist über einen Bügel 39 mit dem Basisstück 27 des Sprinklers 20 verbunden.

Bei einem Brand entsteht Wärme, unter deren Einfluss das Glasfass 37 zerspringt. Der Druck des Löschmittels entfernt den Verschlussstopfen 36 aus der Auslassöffnung 35, so dass das Löschmittel durch die Auslassöffnung 35 austreten kann. Das Löschmittel trifft auf den Sprühteller 38 und wird zur Seite abgelenkt.

## Patentansprüche

1. Feuerlöschanlage mit einem Rohr (19) zum Zuführen eines Löschmittels und mit einem an das Rohr (19) angeschlossenen Sprinkler (20), wobei der Sprinkler (20) einen an eine Umfangsfläche (30) des Rohrs (19) angepassten Anschlussflansch (28) aufweist und wobei der Anschlussflansch (28) gegen die Umfangsfläche (30) des Rohrs (19) gespannt ist.

2. Feuerlöschanlage nach 1, **dadurch gekennzeichnet, dass** der Abstand zwischen der Umfangsfläche (30) des Rohrs (19) und der Auslassöffnung (35) des Sprinklers (20) kleiner ist als 10 mm, vorzugsweise kleiner ist als 5 mm, weiter vorzugsweise kleiner ist als 3 mm.

3. Feuerlöschanlage nach Anspruch 1 oder 2, **dadurch gekennzeichnet, dass** der Anschlussflansch (28) eine Auflagefläche (34) bildet, die einem Umfangsabschnitt eines Zylinders entspricht.

4. Feuerlöschanlage nach einem der Ansprüche 1 bis 3, **dadurch gekennzeichnet, dass** zwischen dem Anschlussflansch (28) und der Umfangsfläche (30) des Rohrs (19) ein Dichtelement angeordnet ist.

5. Feuerlöschanlage nach einem der Ansprüche 1 bis 4, **dadurch gekennzeichnet, dass** der Abstand zwischen dem distalen Ende (41) des Sprinklers (20) und der Umfangsfläche (30) des Rohrs (19) zwischen 5 mm und 50 mm, vorzugsweise zwischen 10 mm und 40 mm liegt.

6. Feuerlöschanlage nach einem der Ansprüche 1 bis 5, **dadurch gekennzeichnet, dass** der Sprinkler (20) mit einer Montageschelle (26) gegen das Rohr (19) gespannt ist, wobei das Rohr (19) zwischen der Montageschelle (26) und dem Rohr (19) eingeschlossen ist.

7. Feuerlöschanlage nach einem der Ansprüche 1 bis 6, **dadurch gekennzeichnet, dass** der Anschlussflansch (28) mit einem Spannelement (33) gespannt ist und dass Spannelement (33) schwenkbar relativ zu dem Sprinkler (20) gelagert ist.

8. Lagerregal mit einer Feuerlöschanlage nach einem der Ansprüche 1 bis 7, **dadurch gekennzeichnet, dass** das Rohr (19) der Feuerlöschanlage oberhalb einer Lagerplattform (15) des Lagerregals (14) angeordnet ist.

9. Lagerregal nach Anspruch 8, **dadurch gekennzeichnet, dass** das Lagerfach der Lagerplattform (15) durch eine obere Abschlusskante (42) begrenzt ist und dass das distale Ende (41) des Sprinklers (20) zwischen 2 mm und 30 mm, vorzugsweise zwischen 5 mm und 20 mm unterhalb der Abschlusskante (42) des Lagerfachs angeordnet ist.

10. Sprinkler für eine Feuerlöschanlage nach einem der Ansprüche 1 bis 7, wobei der Sprinkler (20) eine Einlassöffnung (44) aufweist, die dazu bestimmt ist, an ein Rohr (19) der Feuerlöschanlage angeschlossen zu werden, sowie eine Auslassöffnung (35), die in einem Bereitschaftszustand des Sprinklers (20) mit einem Verschlusselement (36) verschlossen ist, wobei der Sprinkler (20) einen Anschlussflansch (28) umfasst, der eine Auflagefläche (34) in Form eines Umfangsabschnitts eines Zylinders bildet, und wobei die Einlassöffnung (44) eine Ausnehmung in der Auflagefläche (34) des Anschlussflanschs (28) bildet.
